# FASCICULE DE BREVET EUROPEEN

(11) **EP 3 194 771 B1**
(45) Date de publication et mention de la délivrance du brevet: **04.09.2019**
(21) Numéro de dépôt: 15759870.7
(22) Date de dépôt: 28.07.2015
(51) Int. Cl.: F04B 1/04, F04B 1/047, F03C 1/34, F03C 1/047, F04B 1/107, F03C 1/40, F03C 1/06

(54) **DISPOSITIF DE DISTRIBUTION POUR UNE MACHINE HYDRAULIQUE**
VERTEILUNGSVORRICHTUNG FÜR EINE HYDRAULISCHE MASCHINE
DISTRIBUTION DEVICE FOR A HYDRAULIC MACHINE

(30) Priorité: 31.07.2014 FR 1457462
(43) Date de publication de la demande: 26.07.2017
(73) Titulaire: Poclain Hydraulics Industrie, 60410 Verberie (FR)
(72) Inventeur: VIARD, Julien, F-60410 Verberie (FR)
(74) Mandataire: Intès, Didier Gérard André
(86) Numéro de dépôt international: PCT/FR2015/052086
(87) Numéro de publication internationale: WO 2016/016573

(56) Documents cités:
- FR-A- 1 460 752
- FR-A- 1 563 866
- FR-A1- 2 606 092
- FR-A1- 2 678 322
- FR-A1- 2 911 941

## Description

La présente invention concerne un dispositif de distribution pour une machine hydraulique comprenant un distributeur interne configuré pour être disposé dans une partie de carter, le distributeur interne comprenant un corps qui présente une face axiale externe présentant deux gorges principales, respectivement pour l'alimentation et l'échappement de fluide, et une face radiale de distribution, le distributeur comportant des conduits de distribution qui débouchent dans la face de distribution et un sélecteur de cylindrée qui comprend un tiroir apte à être déplacé dans un alésage axial du distributeur, pour relier les conduits de distribution à l'une ou l'autre des gorges principales, le dispositif comprenant une chambre de commande apte à être alimentée en fluide pour provoquer le déplacement du tiroir et au moins un ressort de rappel d'effet antagoniste.

Un dispositif de ce type est connu, par exemple par les documents FR 2 673 684 et FR 2 951 798. De manière connue, la machine comprend un bloc-cylindres avec une face de communication dans laquelle débouchent des conduits de cylindres pour être mis en liaison fluidique avec les conduits de distribution, au cours de la rotation du bloc-cylindres par rapport au distributeur. Pour que cette liaison fluidique soit réalisée dans de bonnes conditions, en minimisant les fuites à l'interface entre la face de communication et la face de distribution, cette dernière doit être en appui contre la face de communication. Au cours de la rotation relative du bloc-cylindres et du distributeur, les orifices des conduits de distribution situés dans la face de distribution se trouvent alternativement en regard avec des orifices des conduits de cylindres et avec des parties pleines de la face de communication. La pression de fluide provenant des conduits de distribution, s'exerçant sur ces parties pleines tend à écarter le distributeur du bloc-cylindres. Cet effet d'écartement doit être compensé par un appui hydraulique contraire qui, en s'exerçant sur certaines surfaces du distributeur, tend à le rapprocher du bloc-cylindres. En d'autres termes, l'appui hydraulique doit être équilibré.

Dans ces dispositifs connus, le sélecteur de cylindrée doit être assemblé avec le distributeur lors du montage de la machine hydraulique. La chambre de commande est notamment délimitée par une partie de paroi radiale du distributeur, opposée à la face de distribution, de sorte que l'augmentation de la pression de fluide dans cette chambre due à une commande de déplacement du tiroir, peut contribuer à déplacer le distributeur vers le bloc-cylindres de la machine, créant ainsi une poussée parasite qui nuit à l'équilibrage de l'appui hydraulique.

Dans les dispositifs connus, cette poussée parasite est reprise, via le distributeur, par le bloc-cylindres sur lequel le distributeur est en appui. Cette poussée reprise s'applique sur les roulements qui supportent la rotation relative du bloc-cylindres et de la came, et tend à écarter les unes des autres les différentes parties du carter. Il en résulte un risque de déformation, d'usure et de grippage, en particulier au niveau de la coopération entre le bloc-cylindres et le distributeur.

Au final, les réglages sont relativement complexes et dépendent de l'assemblage du distributeur et du sélecteur de cylindrée.

Les documents FR 2 678 322, FR 1 563 866, FR 2 606 092 et FR 1 460 752 montrent d'autres exemples de dispositifs de distribution pour une machine hydraulique.

L'invention vise à au moins substantiellement remédier aux inconvénients précités.

Ce but est atteint grâce à un dispositif selon la revendication 1. Dans ce dispositif, la chambre de commande est située à une première extrémité de l'alésage et est fermée, du côté opposé à la face de distribution, par une première paroi de fond du distributeur, la chambre de commande étant ménagée entre la première paroi de fond et la première extrémité du tiroir tournée vers cette paroi, et au fait que le ressort de rappel est disposé dans une chambre de rappel, située à la deuxième extrémité de l'alésage et fermée, du côté de la face de distribution, par une deuxième paroi de fond du distributeur.

Ainsi, le distributeur interne peut être assemblé et manipulé comme un tout, avec son corps et le tiroir du sélecteur de cylindrée, l'alésage étant fermé à ses deux extrémités par les première et deuxième parois de fond. De plus, la pression de fluide dans la chambre de commande agit entre le tiroir et la première paroi de fond de l'alésage, tandis que le ressort est logé dans la chambre de rappel fermée par la deuxième paroi de fond. Ainsi, aussi bien les efforts qui sont exercés dans la chambre de commande par le fluide hydraulique, que ceux qui sont exercés dans la chambre de rappel par le ressort, ne concernent que des surfaces faisant partie du tout constitué par le distributeur assemblé. Il en résulte que ces efforts sont internes au distributeur et sont sans effet sur l'équilibrage de l'appui de la face de distribution du distributeur contre la face de communication du bloc-cylindres.

Selon une option, l'alésage est disposé au centre du distributeur interne.

La structure est alors extrêmement simple, le distributeur pouvant présenter une symétrie de révolution autour de l'axe de rotation du rotor de la machine hydraulique.

Selon une option, les conduits de distribution et l'alésage axial sont formés dans un même bloc formant le corps du distributeur interne, et au moins l'une des première et deuxième parois de fond est formée par un élément de paroi, rapporté sur le corps à une extrémité de l'alésage axial.

Ainsi, le nombre de pièces constituant le distributeur est réduit, de sorte que la fabrication et l'assemblage sont simplifiés.

L'alésage axial peut être borgne, l'une des parois de fond, en particulier la première paroi de fond, étant formée dans le corps.

Ceci limite encore le nombre de pièces.

Selon une option, au moins l'une des extrémités de l'alésage axial, en particulier la deuxième extrémité de l'alésage, est une extrémité ouverte qui présente une partie terminale élargie délimitée par un épaulement, la paroi de fond de ladite extrémité ouverte étant formée par un élément de paroi rapporté qui est disposé dans la partie terminale élargie et qui est maintenu bloqué contre l'épaulement par un moyen de blocage tel qu'un circlips.

La réalisation de la paroi de fond concernée, et son assemblage avec le reste du distributeur sont ainsi particulièrement simples.

Selon une option, l'élément de paroi rapporté coopère avec le corps via un joint d'étanchéité.

Ceci est en particulier le cas lorsque l'élément de paroi rapporté est la première paroi de fond, délimitant la chambre de commande.

Selon une option, le corps comprend un conduit de pilotage qui relie la chambre de commande à un perçage de la face axiale externe du corps, ce perçage étant disposé dans une portée cylindrique unique de ladite face externe.

Ce conduit peut être réalisé simplement et la portée cylindrique de la face externe dans laquelle est disposé le perçage peut servir d'appui à des joints d'étanchéité. De plus, dans la mesure où cette portée cylindrique est unique (c'est-à-dire qu'elle est définit une surface axiale sensiblement située sur un même diamètre), la pression de fluide dans le conduit de pilotage ne provoque aucune poussée axiale sur le distributeur.

L'invention sera bien comprise et ses avantages apparaîtront mieux à la lecture de la description détaillée qui suit, d'un mode de réalisation représenté à titre d'exemples non limitatifs. La description se réfère aux dessins annexés sur lesquels :
- la figure 1 est une vue en coupe axiale d'une machine hydraulique avec un dispositif de distribution selon l'invention, comprenant un distributeur interne selon un premier type, montrant la configuration de grande cylindrée ;
- la figure 1A est une vue partielle prise de la figure 1, sur laquelle le dispositif de distribution est agrandi et montrant la configuration de petite cylindrée ;
- la figure 2 est une vue analogue à la figure 1A, avec un distributeur interne d'un deuxième type, en configuration de grande cylindrée ; et
- la figure 3 est une vue analogue à la figure 2, montrant la configuration de petite cylindrée.

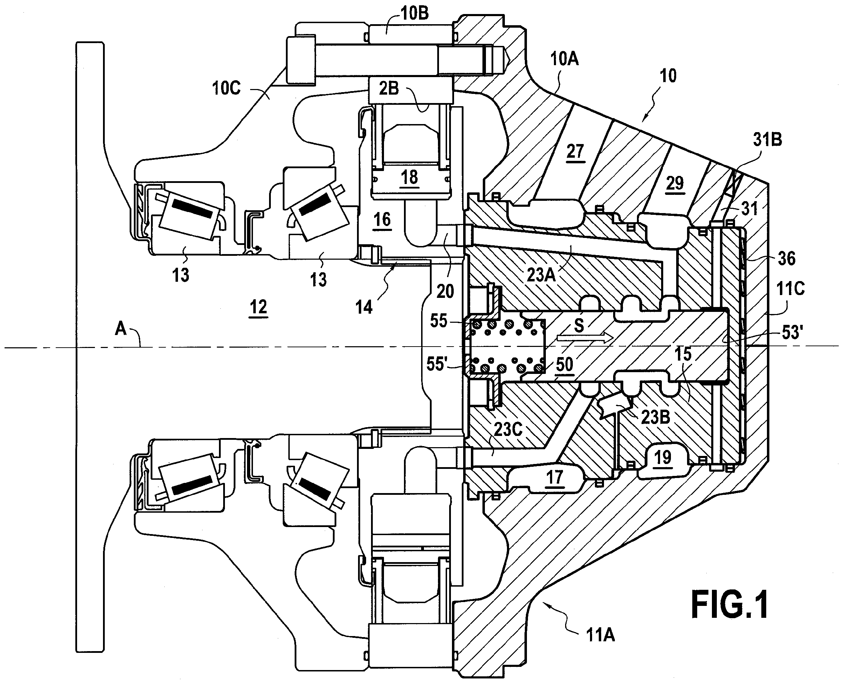

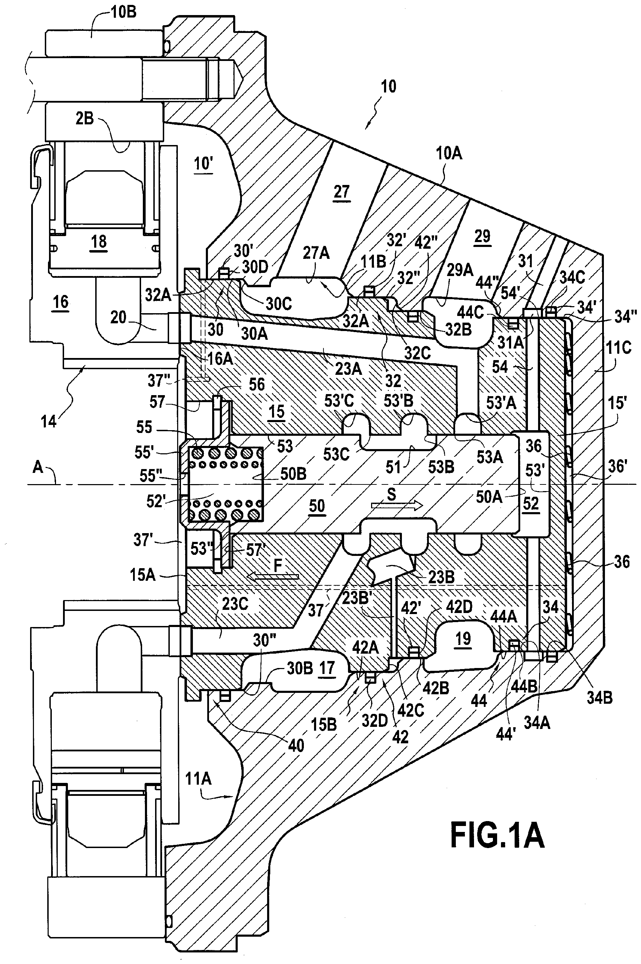

On décrit d'abord la figure 1 qui montre une machine hydraulique, en particulier un moteur hydraulique. Il est toutefois entendu que l'invention s'applique également à d'autres types de machine hydraulique, en particulier une pompe hydraulique.

De manière connue en soi, le moteur de la figure 1 comprend un carter 10 en trois parties, respectivement 10A, 10B et 10C. La première partie 10A du carter est un dispositif de carter de distribution. La deuxième partie 10B porte, sur sa périphérie interne, une came ondulée 2B. La troisième partie 10C sert en l'espèce de logement à l'arbre de sortie 12 du moteur hydraulique, en maintenant cet arbre en rotation par des paliers 13. L'arbre de sortie coopère, en particulier par des cannelures 14 ou analogues, avec la périphérie interne d'un bloc-cylindres 16 disposé dans la partie 10B du carter. Ainsi, le bloc-cylindres 16 et l'arbre 12 tournent ensemble par rapport au carter 10 autour d'un axe de rotation A.

De manière connue en soi, le bloc-cylindres comprend une pluralité de cylindres radiaux 18 dans lesquels sont disposés des pistons qui coopèrent avec la came 2B. Le bloc-cylindres comprend des conduits de cylindres 20 qui font communiquer les cylindres 18 avec la face de communication 16A du bloc-cylindres.

La partie de carter 10A présente deux perçages principaux, respectivement 27 et 29 qui débouchent dans la face axiale interne 11B de la partie de carter 10A, respectivement par un premier orifice principal 27A et un deuxième orifice principal 29A. Comme on le voit, ces deux orifices principaux sont disposés successivement dans le sens S allant en s'éloignant de l'extrémité ouverte 11A de la partie de carter 10A.

Un distributeur interne est disposé dans la partie de carter 10A, en étant fixe en rotation avec cette dernière. Le corps 15 du distributeur interne présente une face axiale externe 15B dans laquelle sont ménagées deux gorges principales, respectivement 17 et 19, qui sont respectivement reliées en permanence aux perçages principaux 27 et 29.

Le distributeur interne comprend des conduits de distribution, qui sont percés dans son corps 15 et dont les orifices débouchent dans une face radiale de distribution 15A du distributeur interne située à l'extrémité axiale ouverte 11A de la partie de carter 10A. Cette face radiale est en appui contre la face de communication 16A du bloc-cylindres.

Via les gorges 17 et 19 et les perçages 27 et 29, les conduits de distribution sont mis en communication avec soit l'alimentation en fluide, soit l'échappement de fluide. Leurs orifices qui débouchent dans la face de distribution 15A sont organisés, par rapport aux orifices des conduits de cylindres situés dans la face de communication du bloc-cylindres, de sorte que, au cours de la rotation relative du bloc-cylindres et du carter, les conduits de cylindre sont alternativement mis en communication avec l'alimentation et avec l'échappement.

En l'espèce, les conduits de distribution sont répartis en trois groupes. Sur les figures 1 et 1A, on a représenté un conduit de distribution de chacun des trois groupes, respectivement 23A, 23B et 23C, qui débouchent tous les trois dans la face de distribution 15A.

Le distributeur interne comprend un sélecteur de cylindrée ayant un tiroir 50 disposé dans un alésage axial 53 du corps 15 du distributeur. Cet alésage 53 est disposé au centre du distributeur interne. Les conduits de distribution 23A, 23B et 23C des trois groupes sont reliés à l'alésage 53, car ils communiquent en permanence avec des orifices de sélection respectifs 53A, 53B et 53C qui sont disposés successivement axialement dans l'alésage 53. En l'espèce, ces orifices sont situés dans des gorges de l'alésage, respectivement 53'A, 53'B et 53'C. L'orifice 53A est relié en permanence à la gorge principale 19, tandis que l'orifice 53C est relié en permanence avec la gorge principale 17. En revanche, l'orifice 53B n'est pas relié en permanence à ces gorges. C'est en fonction de la position du tiroir 50 qu'il est relié à l'une ou l'autre de ces gorges, comme on le verra dans la suite.

Une chambre de commande 52 est située à une première extrémité 53' de l'alésage 53. Elle est fermée, du côté opposé à la face de distribution 15A, par une première paroi de fond 15' du distributeur. Plus précisément, la chambre de commande 52 est ménagée entre la première paroi de fond 15' et l'extrémité 50A du tiroir 50 qui est tournée vers cette paroi 15'. La chambre de commande 52 peut être alimentée en fluide par un conduit de pilotage 54 qui relie cette chambre à un perçage secondaire 31 de la partie de carter 10A qui, en l'espèce, débouche dans la face axiale interne 11B de cette partie de carter par un orifice secondaire 31A situé au-delà du deuxième orifice principal 29A dans le sens allant en s'éloignant de l'extrémité axiale ouverte 11A. Du côté opposé à la chambre 52, le distributeur présente une chambre de rappel 52', dans laquelle est disposé un ressort de rappel 55 travaillant en compression. La chambre de rappel est fermée par une deuxième paroi de fond de l'alésage 53 qui, en l'espèce, est formée par un élément de paroi rapporté, constitué par une coupelle 55' fixée au corps 15 du distributeur. Plus précisément, la deuxième extrémité 53" de l'alésage 53 est ouverte et présente une extrémité terminale élargie 57 délimitée par un épaulement 57' ; la coupelle 55' est disposée dans la partie terminale élargie 57 et est maintenue bloquée contre l'épaulement 57' par un moyen de blocage tel qu'un circlips 56 ou analogue.

Ainsi, le ressort 55 tend à déplacer le tiroir 50 dans le sens S, tandis que l'alimentation en fluide de la chambre de commande 52 tend à déplacer le tiroir dans le sens inverse.

Le corps 15 du distributeur interne peut être fabriqué en un seul bloc et, pour compléter ce distributeur, il suffit de disposer le tiroir de sélection 50 dans l'alésage 53, de mettre en place le ressort 55 et de fixer la coupelle 55'. Le distributeur interne équipé du tiroir de sélection peut alors être manipulé comme un tout.

En l'espèce, la paroi de fond 15' est formée dans le corps 15 du distributeur, en un seul bloc avec lui, seule la paroi de fond opposée, formée par la coupelle 55', étant une paroi rapportée. Le corps du distributeur a donc une forme en cloche. On pourrait bien entendu envisager que l'alésage 53 soit traversant et que ses deux parois de fond soient rapportées. Dans ce cas, la première paroi de fond pourrait être une coupelle ou un disque, conformé et monté pour assurer l'étanchéité nécessaire pour la chambre 52 : contrairement à la coupelle 55' représentée, cette coupelle ou ce disque ne serait pas percé, et un joint serait interposé entre la coupelle et le corps.

On peut également concevoir que la deuxième paroi de fond, qui délimite la chambre de rappel 52', soit formée dans le corps 15 du distributeur, tandis que seule la première paroi de fond serait alors rapportée sur le corps. Un joint serait alors interposé entre cette première paroi et le corps, puisqu'elle délimiterait la chambre de commande.

Pour simplifier la fabrication du corps du distributeur, le conduit 54 peut être un perçage radial, traversant le corps de part en part.

Le tiroir 50 présente une gorge annulaire externe 51, dénommée gorge de sélection. Dans la première position du tiroir 50, représentée sur la figure 1, la gorge 51 fait communiquer entre eux les premier et deuxième orifices de sélection 53A et 53B, qui ne sont alors pas reliés au troisième orifice de sélection 53C. En conséquence, les conduits de distribution du premier groupe 23A sont mis à la même pression que ceux du deuxième groupe 23B. Dans la deuxième position du tiroir 50 représentée sur la figure 1A, le tiroir s'est déplacé dans le sens de la flèche F et la gorge annulaire externe 51 fait communiquer les orifices 53B et 53C qui ne sont alors pas reliés au premier orifice de sélection 53A. En conséquence, les conduits de distribution du deuxième groupe 23B sont mis à la même pression que ceux du troisième groupe 23C.

Par exemple, en situation normale de fonctionnement, l'orifice principal 29 sert à l'alimentation en fluide, tandis que l'orifice principal 27 sert à l'échappement de fluide. Le nombre de conduits de distribution du troisième groupe est égal à la somme du nombre des conduits des premier et deuxième groupes. Lorsque le tiroir 50 est dans sa première position (figure 1), tous les conduits de distribution des premier et deuxième groupes 23A et 23B servent à l'alimentation, tandis que les conduits de distribution du troisième groupe 23C servent à l'échappement. Le moteur fonctionne alors en pleine cylindrée. En revanche, dans la deuxième position du tiroir 50 représentée sur la figure 1A, seuls les conduits de distribution du premier groupe 23A servent à l'alimentation, tandis que les conduits de distribution des deuxième et troisième groupes 23B et 23C servent à l'échappement. Ainsi, le sous-moteur correspondant aux conduits de distribution du deuxième groupe 23B et au sous-groupe des conduits de distribution du troisième groupe 23C qui lui sont associés est inactivé, ses conduits de distribution étant placés à la même pression.

Dans le mode de fonctionnement non préférentiel, le perçage principal 29 sert à l'échappement tandis que le perçage principal 27 sert à l'alimentation. Dans ce cas, dans la deuxième position du tiroir de sélection 50, les conduits de distribution des deuxième et troisième groupes sont placés à la même pression qui est alors la pression d'alimentation. Le sous-moteur inactivé est alors soumis à la pression d'alimentation, de sorte que ce sous-moteur peut opposer un couple résistant. Ce sens de fonctionnement en petite cylindrée est alors non préférentiel.

On relève que, en l'espèce, la partie 10A de carter a une forme en cloche, avec un fond 11C opposé à son extrémité axiale ouverte 11A. Elle est en l'espèce réalisée en une seule pièce, par fonderie et/ou usinage. Bien entendu, on pourrait réaliser la partie de carter 10A en deux pièces, soit une première pièce ouverte axialement de part en part, et un couvercle formant le fond opposé à l'extrémité axiale ouverte, rapporté sur cette première pièce.

On relève que la face axiale interne 11B présente un premier agencement de portée interne d'étanchéité 30, un deuxième agencement de portée interne d'étanchéité 32, et un troisième agencement de portée interne d'étanchéité 34. Le premier agencement 30 est situé entre l'extrémité axiale ouverte 11A et le premier orifice principal 27A, le deuxième agencement est situé entre les deux orifices principaux 27A et 29A, et le troisième agencement est situé au-delà du deuxième orifice 29A par rapport à l'extrémité axiale ouverte.

Au sens de la présente description, une surface de portée axiale d'étanchéité est une surface cylindrique de rayon constant, orientée axialement, pouvant coopérer à étanchéité avec une surface correspondante située en vis-à-vis, via un joint d'étanchéité. Au sens de la présente description, un agencement de portée interne d'étanchéité est un agencement qui comprend au moins une surface axiale interne d'étanchéité.

On voit que le premier agencement de portée interne d'étanchéité comprend deux surfaces de portée axiale respectivement 30A et 30B qui sont étagées l'une par rapport à l'autre, en étant séparées par un épaulement 30C qui est tourné vers l'extrémité axiale ouverte. De même, le deuxième agencement de portée axiale d'étanchéité comprend une première surface de portée axiale 32A, une deuxième surface de portée axiale 32B qui sont étagées l'une par rapport à l'autre, en étant séparées par un épaulement 32C qui est également tourné vers l'extrémité axiale ouverte 11A. En revanche, le troisième agencement de portée interne d'étanchéité comprend deux surfaces axiales d'étanchéité, respectivement 34A et 34B, qui sont situées sur un même rayon.

La surface de portée 30A du premier agencement 30 présente une gorge annulaire 30D dans laquelle est disposé un joint d'étanchéité 30', de même que la première surface axiale de portée 32A du deuxième agencement 32 présente une gorge annulaire 32D dans laquelle est disposé un joint 32'. En outre, la surface axiale de portée 34B du troisième agencement 34 comprend également une gorge annulaire 34C, dans laquelle est disposé un joint 34'.

Les deux surfaces de portée axiale 34A et 34B du troisième agencement de portée interne 34 sont situées de part et d'autre de l'ouverture 31A du perçage secondaire 31.

Par ailleurs, la face axiale externe 15B du distributeur interne 15 présente trois agencements de portée externe d'étanchéité, respectivement 40, 42 et 44, qui sont respectivement aptes à coopérer avec le premier, le deuxième et le troisième agencement de portée interne d'étanchéité 30, 32 et 34 de la partie de carter 10A.

Au moins l'un des agencements de portée externe d'étanchéité du distributeur interne, en l'espèce l'agencement 42, est un agencement externe étagé qui est apte à coopérer avec l'un des agencements internes étagés, en l'espèce l'agencement 32. On voit en effet que cet agencement 42 comprend deux surfaces de portée axiale, respectivement 42A et 42B qui sont étagées l'une par rapport à l'autre en étant séparées par un épaulement 42C qui est tourné du côté opposé à la face de distribution 15A. En d'autres termes, cet épaulement 42C fait face à l'épaulement 32C de l'agencement de portée interne d'étanchéité 32. La surface de portée axiale 42A de l'agencement 42 coopère avec la surface de portée axiale 32A de l'agencement 32 via le joint d'étanchéité 32'. De même, la surface de portée axiale 42B coopère avec la surface de portée axiale 32B de l'agencement 32 via un joint d'étanchéité. En l'espèce, ce joint 42' est disposé dans une gorge 42D pratiquée dans la surface axiale 42B. Ainsi, l'espace situé entre les épaulements 32C et 42C en regard est étanché de part et d'autre axialement.

En revanche, l'agencement de portée externe d'étanchéité 40 comprend une portée axiale avec une surface axiale unique, qui coopère avec la surface 30A de l'agencement 30, via le joint 30'.

De son côté, l'agencement de portée externe d'étanchéité 44 comprend une portée axiale cylindrique unique, avec deux surfaces axiales 44A et 44B qui sont situées sur un même diamètre et qui coopèrent respectivement avec les surfaces axiales 34A et 34B, respectivement via le joint 34' et via un joint 44' situé dans une gorge 44C de la surface axiale 44A. Le conduit de pilotage 54 relie la chambre de commande 52 à un perçage 54' de la face axiale externe du corps 15, qui est disposé dans la portée axiale 44, entre les deux surfaces 44A et 44B. Il en résulte que l'alimentation en fluide de la chambre de commande 52 ne provoque aucune poussée sur le distributeur.

On a indiqué que les joints 30', 32' et 34' sont situés dans des gorges, respectivement 30D, 32D et 34C, de la face axiale interne 11B de la partie 10A du carter. Ces gorges sont respectivement formées dans le premier, le deuxième et le troisième agencement de portée interne d'étanchéité 30, 32, 34. Les joints 42' et 44' sont, quant à eux, situés dans des gorges, respectivement 42D et 44C de la face axiale externe 15B du corps 15 du distributeur.

Ces différents joints sont mis en place dans ces gorges avant le montage du distributeur dans le carter. Pour ce montage, le distributeur est inséré dans le carter par un déplacement axial dans le sens de la flèche S de la figure 1A. La face axiale externe 15B du corps 15 du distributeur est pourvue de chanfreins 34", 32" et 30" qui coopèrent respectivement avec les joints 34', 32' et 30' lors de l'insertion du distributeur dans le carter, et la face axiale de la partie de carter 10A est pourvue de chanfreins 44" et 42", qui coopèrent respectivement avec les joints 44' et 42' lors de cette insertion. Ces chanfreins, qui pourraient être remplacés par des congés ou des parties arrondies, forment des surfaces de guidage qui contribuent à maintenir les joints en place dans leurs gorges respectives lors du montage du corps du distributeur dans la partie 10A du carter.

L'orifice de sélection 53B est relié à l'agencement externe étagé 12. On voit en effet que, via un tronçon de conduit radial 23B' (il peut y en avoir plusieurs) relié à un conduit de distribution du deuxième groupe 123B, l'orifice 53B est relié à l'espace ménagé entre les épaulements respectifs 32C et 42C des agencements 32 et 42. Ainsi, la pression de fluide circulant dans les conduits de distribution du deuxième groupe prend appui sur l'épaulement 32C pour agir sur l'épaulement 42C et tendre à repousser le distributeur vers la face de communication du bloc-cylindres, dans le sens de la flèche F.

Un ressort 36 coopère avec la partie de carter 10A et avec le distributeur interne pour éloigner ce dernier du fond 11C de la partie de carter 10A opposée à son extrémité ouverte. Ceci permet d'initier l'appui de la face de distribution contre la face de communication, cet appui étant renforcé, lorsque la pression augmente alors que le moteur est en fonctionnement, par l'appui fluidique réalisé par la pression de fluide dans les gorges 17 et 19. Dans le même temps, la pression de fluide entre les épaulements 32C et 42C contribue à cet appui fluidique avec un effort approprié, équilibrant le contre-appui provenant de la pression du fluide aux orifices de distribution contre les parties pleines de la face de communication. Ainsi, que le moteur fonctionne en grande cylindrée ou en petite cylindrée, la face de distribution du distributeur est correctement appliquée contre la face de communication du bloc-cylindres, avec l'équilibrage approprié.

On note que le ressort 36 est situé entre la première paroi de fond 15' du distributeur et le fond 11C du carter qui fait face à cette première paroi de fond. Plus précisément, le ressort 36, qui sollicite l'appui axial du distributeur interne contre le bloc-cylindres est situé dans une chambre de ressort 36' ménagée axialement entre le fond 11C du carter et le corps 15 du distributeur interne, la première paroi de fond 15' de ce distributeur étant ainsi située entre la chambre de commande 52 du tiroir 50 du sélecteur de cylindrée et la chambre 36' du ressort 36. Ceci favorise l'équilibrage des efforts dus à une augmentation de la pression dans la chambre de commande 52. Lorsque, comme dans l'exemple représenté, la chambre 36' prend la forme d'une enceinte cylindrique de grand diamètre (correspondant au diamètre interne du fond 11C du carter), ceci favorise également la bonne répartition des efforts d'appui exercés par le ressort 36 sur le distributeur interne et la compacité de l'ensemble, le ressort 36 (qui peut prendre la forme de plusieurs petits ressorts répartis dans la chambre 36') pouvant occuper plusieurs hauteurs radiales de la chambre 36', tout en ayant une faible épaisseur axiale et en présentant la raideur adaptée à son usage.

Si des fuites surviennent entre le carter et le distributeur interne (en particulier en cas de défaillance du joint 34'), la pression peut augmenter dans la chambre 36'. Combinée avec le ressort 36, cette pression risque d'exercer une poussée trop importante sur le distributeur interne. Il peut donc être souhaitable de drainer la chambre 36'. A cette fin, un conduit de drainage 37 peut relier la chambre 36' à une enceinte de drainage. Un exemple pour un tel conduit de drainage 37 est représenté en traits interrompus sur la figure 1A. Dans cet exemple, le conduit de drainage prend la forme d'un perçage, en particulier un perçage axial, du corps 15 du distributeur interne, qui relie la chambre 36' à une enceinte de drainage 37' située entre le bloc-cylindres et le distributeur (dans une région radialement distincte de la zone de contact entre la face de distribution et la face de communication), cette enceinte de drainage étant reliée à l'espace intérieur 10' du carter par un conduit de liaison 37", et cet espace interne étant lui-même relié à un réservoir sans surpression par un conduit de retour de fuites connu en soi et non représenté. Dans l'exemple représenté, le conduit de drainage 37 et le conduit de liaison 37" sont distincts, le conduit 37 étant formé par un perçage axial, tandis que le conduit 37" est formé par un perçage essentiellement radial. Bien entendu, ces perçages pourraient être reliés, par exemple pour former un perçage en T ayant un tronçon axial qui relie la chambre 36' à l'enceinte 37' et un tronçon ayant au moins une composante radiale qui relie l'enceinte 37' à l'espace intérieur 10' du carter.

On relève par ailleurs que la deuxième paroi de fond du distributeur, en l'espèce formée par la coupelle 55', présente un perçage 55" qui permet le drainage de la chambre de rappel 52', pour éviter une augmentation de la pression dans cette chambre. En l'espèce, ce perçage 55" fait communiquer la chambre de rappel 52' avec l'enceinte de drainage 37'.

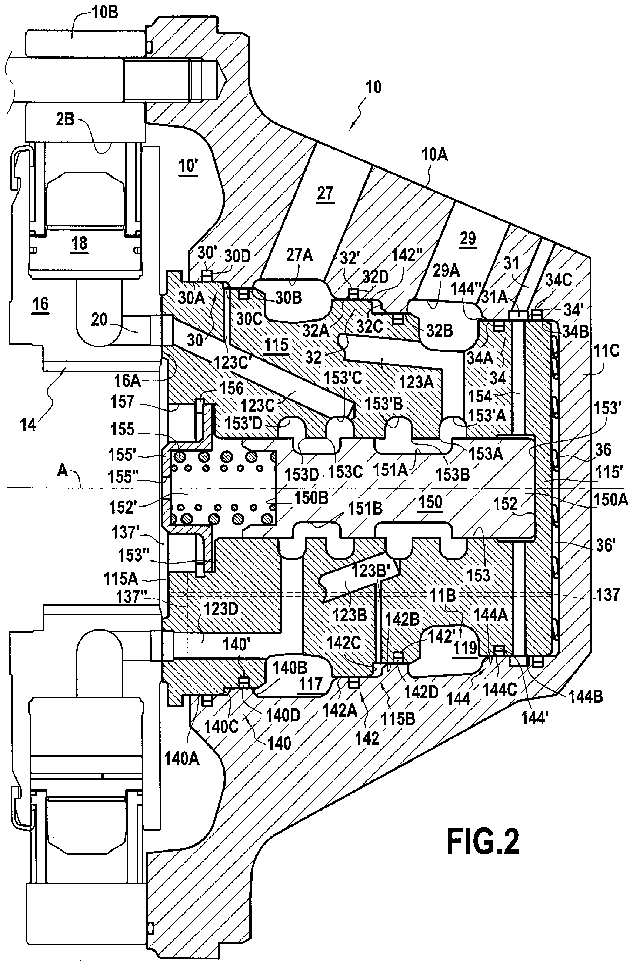

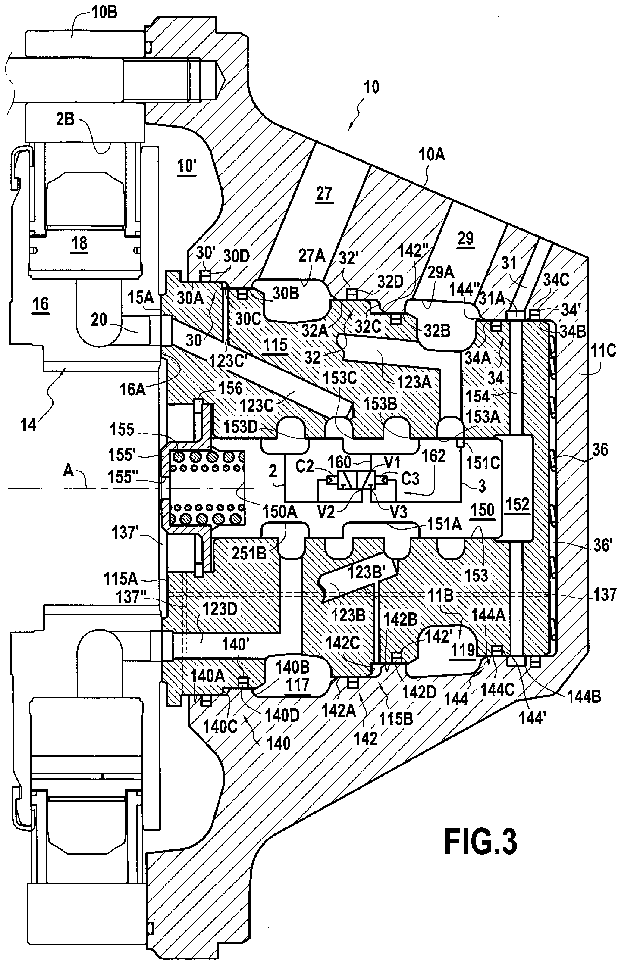

On décrit maintenant les figures 2 et 3, qui montrent un moteur qui, contrairement à celui des figures 1 et 1A, ne présente pas de sens préférentiel de fonctionnement.

Sur ces figures, le distributeur interne 115 est disposé dans la partie de carter 10A qui est identique à celle des figures 1 et 1A. La face radiale de distribution 115A de ce distributeur est située vers l'extrémité axiale ouverte 11A de la partie de carter 10A et est en appui contre la face de communication 16A du bloc-cylindres. La face axiale externe 115B du distributeur est en regard avec la face axiale interne 11B de la partie de carter 10A. Cette face axiale externe 115B présente deux gorges principales, respectivement 117 et 119, respectivement en regard des premier et deuxième orifices principaux 27 et 29. Elle présente en outre trois agencements de portée externe d'étanchéité, respectivement 140, 142 et 144.

Ces agencements de portée externe d'étanchéité sont respectivement aptes à coopérer avec le premier, le deuxième et le troisième agencement de portée interne d'étanchéité 30, 32 et 34 de la partie de carter 10A.

Le distributeur interne 115 comprend des conduits de distribution qui s'ouvrent dans la face de distribution 115A et sont configurés pour être reliés à l'une ou l'autre des gorges principales 117 et 119 via un tiroir de sélection 150 monté mobile dans un alésage axial 153 du distributeur.

Avant de décrire le tiroir plus en détail, on relève que les deux agencements de portée externe d'étanchéité 140 et 142 sont des agencements étagés. En effet, ils présentent chacun deux surfaces de portée axiale, respectivement 140A, 140B et 142A, 142B qui sont étagées l'une par rapport à l'autre en étant séparées par un épaulement, respectivement 140C et 142C qui est tourné du côté opposé à la face de distribution 115A. Les agencements de portée externe d'étanchéité 140 et 142 qui sont étagés coopèrent respectivement avec les agencements de portée interne d'étanchéité étagée 30 et 32. En effet, les épaulements 140C et 142C sont respectivement situés en regard des épaulements 30C et 32C. En revanche, le troisième agencement de portée externe d'étanchéité 144 présente deux surfaces de portée axiale, respectivement 144A et 144B qui sont situées sur un même diamètre. Ces deux surfaces axiales coopèrent respectivement avec les deux surfaces axiales 34A et 34B du troisième agencement de portée interne d'étanchéité.

Par ailleurs, l'agencement 140 présente, sur sa surface axiale 140B, une gorge 140D dans laquelle est situé un joint d'étanchéité 140', de même que la surface axiale 142B présente une gorge 142D dans laquelle est situé un joint 142'. Ainsi, les espaces situés entre les épaulements 140C et 30C sont étanchés de part et d'autre par les joints 30' et 140', de même que l'espace situé entre les épaulements 142C et 32C est étanché de part et d'autre par les joints 32' et 142'. La surface axiale 144A présente quant à elle une gorge 144C dans laquelle est situé un joint d'étanchéité 144'. Ainsi, l'orifice 31A du perçage secondaire 31, qui communique avec un conduit de pilotage 154 du distributeur 115 (analogue au conduit 54 des figures précédentes), est étanché de part et d'autre par les joints 144' et 34'. En effet, le conduit de pilotage 154 débouche dans la face axiale externe 115B du corps 115 du distributeur par un perçage 154' situé entre les surfaces 144A et 144B.

Le perçage secondaire sert ainsi à l'alimentation de la chambre de commande 152 du sélecteur de cylindrée située à l'extrémité 153' de l'alésage 153, et délimitée entre la première paroi de fond 115' du distributeur et l'extrémité 150A du tiroir de sélection 150 opposée à la face de distribution 115A.

L'alésage axial 153 central interne du distributeur 115 présente quatre orifices de sélection, respectivement 153A, 153B, 153C et 153D qui sont disposés successivement axialement. Ces orifices s'ouvrent dans des gorges annulaires, respectivement 153'A, 153'B, 153'C et 153'D. Chacun des orifices de sélection est relié à un groupe de conduits de distribution. On a ainsi représenté sur la figure 2 un conduit de distribution 123A du premier groupe relié à l'orifice 153A, un conduit de distribution 123B du deuxième groupe relié à l'orifice 153B, un conduit de distribution 123C du troisième groupe relié à l'orifice 153C et un conduit de distribution 123D du quatrième groupe relié à l'orifice 153D. L'orifice de sélection 153B est relié à l'agencement externe étagé 142 via un tronçon de conduit 123B' qui s'étend entre le conduit 123B et l'espace entre les épaulements 32C et 142C. De même, l'orifice de sélection 153C est relié à l'agencement externe étagé 140 via un tronçon de conduit 123C' qui s'étend entre le conduit 123C et l'espace entre les épaulements 30C et 140C.

Sur la figure 2, le tiroir 150 occupe sa première position, dans laquelle les orifices de sélection sont reliés deux à deux. En effet, les orifices 153A et 153B sont reliés entre eux en étant isolés des deux autres, tandis que les orifices 153C et 153D sont reliés entre eux en étant isolés des deux autres. L'orifice de sélection 153A est par ailleurs relié en permanence à la gorge 119 et donc à l'orifice principal 29, de même que l'orifice de sélection 153D est relié en permanence à la gorge 117 et donc à l'orifice principal 27. En conséquence, dans la première position du tiroir représentée sur la figure 2, les conduits de distribution des premier et deuxième groupes 123A, 123B sont tous reliés à l'orifice principal 29, tandis que les conduits de distribution des troisième et quatrième groupes, 123C et 123D sont tous les deux reliés à l'orifice principal 27.

Plus précisément, le tiroir de sélection 150 présente deux gorges de sélection, respectivement 151A et 151B qui, dans la première position du tiroir représentée sur la figure 2, relient respectivement les orifices de sélection 153A et 153B, et les orifices de sélection 153C et 153D. Il s'agit alors d'un fonctionnement en grande cylindrée, le rotor du moteur tournant dans un sens ou en sens contraire selon que des orifices principaux 27 et 29 servent respectivement à l'alimentation et à l'échappement ou inversement.

On relève que les deux orifices de sélection 153B et 153D qui sont respectivement reliés aux agencements étagés 140 et 142 ne sont pas reliés par le tiroir de sélection 150 dans la première position de ce dernier illustrée sur la figure 2.

En revanche, dans la deuxième position du tiroir 150 illustrée sur la figure 3, la gorge 151A relie les deuxième et troisième orifices de sélection 153B et 153C. Dans cette situation, la gorge de sélection 151B est seulement disposée en regard du troisième orifice de sélection 153D.

Le tiroir de sélection 150 passe de sa première à sa deuxième position par alimentation en fluide de la chambre de commande 152, via le perçage secondaire 31 et le perçage 154 du distributeur 115. Cette pression de fluide est d'effet antagoniste de l'effort de rappel exercé par un ressort 155 disposé à l'extrémité opposée du tiroir de sélection 150. Comme dans l'exemple des figures 1 et 1A, ce ressort est situé dans une chambre de rappel 152' située à la deuxième extrémité 153" de l'alésage 153 et prend appui, d'une part, sur l'extrémité 150B du tiroir 150 opposée à la chambre 152 et, d'autre part, sur une coupelle 155' fixée au corps 115 du distributeur via un circlips ou analogue 156, par coopération avec un épaulement 157' délimitant une partie terminale élargie 157 de l'alésage.

Ainsi, la conformation de l'alésage 153 est analogue à celle de l'alésage 53 des figures 1 et 1A, en ce qui concerne ses première et deuxième parois de fond, 115' et 155'. Les mêmes variantes de réalisation de ces parois que celles qui ont été évoquées en relation avec les figures 1 et 1A peuvent être envisagées.

Le tiroir de sélection comprend une liaison 160 qui, dans sa deuxième position illustrée sur la figure 3, relie entre eux les deux orifices de sélection 153B et 153C et un sélecteur de liaison 162 qui, dans la deuxième position du tiroir 150, relie cette liaison 160 avec celui des deux autres orifices de sélection, 153A et 153D, qui est à la plus basse pression. Pour simplifier les dessins, la liaison 160 et le sélecteur 162 sont seulement représentés sur la figure 3. On a représenté ce sélecteur 162 de manière très schématique. Il s'agit d'une valve à deux positions et à trois voies, sa voie de sortie V1 étant reliée à la liaison 160 qui est elle-même reliée à la gorge de sélection 151A de manière à être reliée aux orifices 153B et 153C lorsque le tiroir 150 est dans sa deuxième position. Le sélecteur 162 comprend deux voies d'entrée, respectivement V2 et V3. Dans l'exemple de la figure 3, la voie V2 est reliée à la gorge 151B de manière à être reliée à l'orifice de sélection 153D dans la deuxième position du tiroir 150. La deuxième voie d'entrée V3 du sélecteur 162 est reliée à une gorge additionnelle 151C du tiroir 150 qui, dans la position représentée sur la figure 3, est en regard avec l'orifice 153A. Les conduites 2 et 3, qui relient respectivement les voies V2 et V3 aux gorges 151B et 151C sont également reliées à des chambres de pilotage respectivement C2 et C3. Dans l'exemple représenté, la pression dans le perçage 29, qui sert à l'alimentation, est supérieure à la pression dans le perçage 27 qui sert à l'échappement. En conséquence, la pression dans la chambre de commande C3 est supérieure à la pression dans la chambre de commande C2, et le sélecteur 162 est placé dans la position représentée sur la figure 3, dans laquelle il fait communiquer les voies V2 et V1, en les isolant de la voie V3. Ainsi, la liaison 160 est reliée à l'orifice principal 27 à la plus basse pression. On comprend que, si la pression à l'orifice principal 27 devient supérieure à la pression à l'orifice principal 29, le sélecteur 162 se déplace dans sa deuxième position, dans lequel il fait cette fois communiquer les voies V1 et V3, pour placer la liaison 160 à la basse pression de l'orifice 29.

Dans la situation de la figure 3, seul l'orifice de sélection 153A est relié à la haute pression de l'orifice principal 29, de sorte que seuls les conduits de distribution du premier groupe 123A sont mis à la haute pression. En revanche, les conduits de distribution des deuxième et troisième groupes, respectivement 123B et 123C sont reliés aux conduits de distribution du quatrième groupe 123D par la liaison 160 et le sélecteur 162, et sont donc mis à la basse pression de l'orifice principal 27. Ainsi, les conduits de distribution des deuxième et troisième groupes 123B et 123C sont placés à la même pression, qui est la pression d'échappement, et le sous-moteur correspondant est désactivé. On comprend que si la pression s'inverse aux orifices principaux 27 et 29, c'est cette fois l'orifice 29 qui sert à l'échappement et, par le sélecteur 162, la liaison 160 est cette fois reliée à la basse pression de l'orifice 29, et le sous-moteur désactivé, correspondant aux conduits de distribution 123B et 123C est également mis à la basse pression.

Sur les figures 2 et 3, comme sur les figures précédentes, le ressort 36 coopère avec l'extrémité du distributeur 115 opposée à la face de distribution 115A pour réaliser un premier appui entre la face de distribution et la face de communication. Sous l'effet de la pression de fluide dans les conduits de distribution, ce premier appui est complété par un appui hydraulique, réalisé par la pression de fluide exercée sur les parois des gorges 117 et 119, et également sur les épaulements 142C et 140C en regard des épaulements 32C et 30C. Ainsi, même lorsque le sous-moteur correspondant aux conduits de distribution des deuxième et troisième groupes est désactivé, l'appui hydraulique est équilibré.

Comme sur la figure 1A, le ressort 36 est situé entre la première paroi de fond 115' du distributeur et le fond 11C du carter qui fait face à cette première paroi de fond, en étant situé dans une chambre 36' ménagée axialement entre le fond 11C du carter et le corps 115 du distributeur interne, la première paroi de fond 115' de ce distributeur étant ainsi située entre la chambre de commande 152 du tiroir 150 du sélecteur de cylindrée et la chambre 36' du ressort 36.

De plus, un conduit de drainage 137 relie la chambre 136' à une enceinte de drainage 137' située entre le bloc-cylindres et le distributeur reliée à l'espace intérieur 10' du carter par un conduit de liaison 137". Dans cet exemple, le conduit de drainage 137 et le conduit de liaison 137" sont formé par un perçage en T ayant un tronçon axial qui relie la chambre 36' à l'enceinte 137' et un tronçon radial qui relie l'enceinte 137' à l'espace intérieur 10' du carter.

La coupelle 155' présente un perçage 155" qui permet le drainage de la chambre de rappel 152'. En l'espèce, ce perçage 55" fait communiquer la chambre de rappel 52' avec l'enceinte de drainage 37'.

Par ailleurs, la face axiale externe 115B du corps 15 du distributeur est pourvue de chanfreins, analogues aux chanfreins 34", 32" et 30" décris en référence à la figure 1A, qui coopèrent respectivement avec les joints 34', 32' et 30' lors de l'insertion du distributeur dans le carter, et la face axiale de la partie de carter 10A est pourvue de chanfreins 144" et 142", qui coopèrent respectivement avec les joints 144' et 142' lors de cette insertion.

## Revendications

1. Dispositif de distribution pour une machine hydraulique comprenant un distributeur interne configuré pour être disposé dans une partie de carter (10A), le distributeur interne comprenant un corps (15 ; 115) qui présente une face axiale externe (15B ; 115B) présentant deux gorges principales (17, 19 ; 117, 119), respectivement pour l'alimentation et l'échappement de fluide, et une face radiale de distribution (15A ; 115A), le distributeur interne comportant des conduits de distribution (23A, 23B, 23C ; 123A, 123B, 123C) qui débouchent dans la face radiale de distribution et un sélecteur de cylindrée qui comprend un tiroir (50 ; 150) apte à être déplacé dans un alésage axial (53 ; 153) du distributeur interne, pour relier les conduits de distribution à l'une ou l'autre des gorges principales, le dispositif comprenant une chambre de commande (52 ; 152) apte à être alimentée en fluide pour provoquer le déplacement du tiroir et au moins un ressort de rappel (55 ; 155) d'effet antagoniste, la chambre de commande (52 ; 152) étant située à une première extrémité (53' ; 153') de l'alésage axial (53 ; 153) et étant fermée, du côté opposé à la face radiale de distribution (15A ; 115A), par une première paroi de fond (15' ; 115') du distributeur interne, la chambre de commande étant ménagée entre la première paroi de fond et la première extrémité (50A ; 150A) du tiroir (50 ; 150) tournée vers cette paroi, le ressort de rappel (55 ; 155) étant disposé dans une chambre de rappel (52' ; 152'), située à la deuxième extrémité (53" ; 153") de l'alésage axial et fermée, du côté de la face radiale de distribution (15A ; 115A), par une deuxième paroi de fond (55' ; 155') du distributeur interne, le dispositif comprenant en outre un ressort (36) de poussée qui coopère avec la partie de carter (10A) et le distributeur interne pour éloigner ledit distributeur interne du fond (11C) de la partie de carter (10A), le ressort de poussée étant situé dans une chambre de ressort (36') ménagée axialement entre la première paroi de fond (15'; 115') du distributeur interne qui ferme la chambre de commande et le fond (11C) de la partie de carter (10A), de telle sorte que la première paroi de fond (15') du distributeur interne est située axialement entre la chambre de commande (52, 152) et la chambre de ressort (36').

2. Dispositif selon la revendication 1, **caractérisé en ce que** l'alésage axial (53 ; 153) est disposé au centre du distributeur interne.

3. Dispositif selon la revendication 1 ou 2, **caractérisé en ce que** les conduits de distribution (23A, 23B, 23C ; 123A, 123B, 123C, 123D) et l'alésage axial (53 ; 153) sont formés dans un même bloc formant le corps (15 ; 115) du distributeur interne et **en ce que** au moins l'une des première et deuxième parois de fond est formée par un élément de paroi (55' ; 155'), rapporté sur le corps à une extrémité (53" ; 153") de l'alésage axial.

4. Dispositif selon la revendication 3, **caractérisé en ce que** l'alésage axial (53 ; 153) est borgne, l'une des parois de fond, en particulier la première paroi de fond (15' ; 115'), étant formée dans le corps (15 ; 115).

5. Dispositif selon l'une quelconque des revendications 1 à 4, **caractérisé en ce que** au moins l'une des extrémités de l'alésage axial (53 ; 153), en particulier la deuxième extrémité (53" ; 153") de l'alésage axial, est une extrémité ouverte qui présente une partie terminale élargie (57 ; 157) délimitée par un épaulement (57' ; 157'), la paroi de fond de ladite extrémité ouverte étant formée par un élément de paroi rapporté (55 ; 155) qui est disposé dans la partie terminale élargie et qui est maintenu bloqué contre l'épaulement par un moyen de blocage tel qu'un circlips (56 ; 156).

6. Dispositif selon la revendication 3, 4 ou 5, **caractérisé en ce que** l'élément de paroi rapporté coopère avec le corps (15 ; 115) via un joint d'étanchéité.

7. Dispositif selon l'une quelconque des revendications 1 à 6, **caractérisé en ce que** le corps comprend un conduit de pilotage (54 ; 154) qui relie la chambre de commande (52 ; 152) à un perçage (54') de la face axiale externe du corps, ce perçage étant disposé dans une portée cylindrique unique (44 ; 144) de ladite face axiale externe définissant une surface axiale située sur un même diamètre.

8. Dispositif selon l'une quelconque des revendications 1 à 7, **caractérisé en ce que** la chambre de ressort (36') est reliée par un conduit de drainage (37 ; 137) à une enceinte de drainage (37' ; 137').

9. Dispositif selon la revendication 8, **caractérisé en ce que** le conduit de drainage (37;137) est formé par un perçage du corps (15;115) du distributeur interne.

10. Dispositif selon l'une quelconque des revendications 1 à 9, **caractérisé en ce que** la deuxième paroi de fond (554 ; 155') du distributeur interne est percée pour permettre le drainage de la chambre de rappel (52' ; 152').

## Patentansprüche

1. Verteilvorrichtung für eine hydraulische Maschine, die einen inneren Verteiler umfasst, der dazu ausgestaltet ist, in einem Gehäuseteil (10A) angeordnet zu sein, wobei der innere Verteiler einen Körper (15; 115) umfasst, der eine axiale Außenfläche (15B; 115B), die zwei Hauptnuten (17, 19; 117, 119) für die Zufuhr bzw. den Auslass von Fluid aufweist, und eine radiale Verteilfläche (15A; 115A) aufweist, wobei der innere Verteiler Verteilleitungen (23A, 23B, 23C; 123A, 123B, 123C), die in die radiale Verteilfläche münden, und eine Hubraum-Auswahlvorrichtung umfasst, die einen Schieber (50; 150) umfasst, der geeignet ist, in einer axialen Bohrung (53; 153) des inneren Verteilers verlagert zu werden, um die Verteilleitungen mit der einen oder der anderen von den Hauptnuten zu verbinden, wobei die Vorrichtung eine Steuerkammer (52; 152), die geeignet ist, mit Fluid versorgt zu werden, um die Verlagerung des Schiebers zu bewirken, und mindestens eine Rückstellfeder (55; 155) mit gegenteiliger Wirkung umfasst, wobei die Steuerkammer (52; 152) sich an einem ersten Ende (53'; 153') der axialen Bohrung (53; 153) befindet und auf der der radialen Verteilfläche (15A; 115A) entgegengesetzten Seite durch eine erste Bodenwand (15'; 115') des inneren Verteilers geschlossen ist, wobei die Steuerkammer zwischen der ersten Bodenwand und dem ersten Ende (50A; 150A) des Schiebers (50; 150) eingerichtet ist, das zu dieser Wand gerichtet ist, wobei die Rückstellfeder (55; 155) in einer Rückstellkammer (52'; 152') angeordnet ist, die sich an dem zweiten Ende (53"; 153") der axialen Bohrung befindet und auf der Seite der radialen Verteilfläche (15A; 115A) durch eine zweite Bodenwand (55'; 155') des inneren Verteilers geschlossen ist, wobei die Vorrichtung ferner eine Gegendruckfeder (36) umfasst, die mit dem Gehäuseteil (10A) und dem inneren Verteiler zusammenwirkt, um den inneren Verteiler vom Boden (11C) des Gehäuseteils (10A) zu entfernen, wobei die Gegendruckfeder sich in einer Federkammer (36') befindet, die axial zwischen der ersten Bodenwand (15'; 115') des inneren Verteilers, welche die Steuerkammer schließt, und dem Boden (11C) des Gehäuseteils (10A) derart eingerichtet ist, dass die erste Bodenwand (15') des inneren Verteilers sich axial zwischen der Steuerkammer (52, 152) und der Federkammer (36') befindet.

2. Vorrichtung nach Anspruch 1, **dadurch gekennzeichnet, dass** die axiale Bohrung (53; 153) in der Mitte des inneren Verteilers angeordnet ist.

3. Vorrichtung nach Anspruch 1 oder 2, **dadurch gekennzeichnet, dass** die Verteilleitungen (23A, 23B, 23C; 123A, 123B, 123C, 123D) und die axiale Bohrung (53; 153) in einem selben Block gebildet sind, der den Körper (15; 115) des inneren Verteilers bildet, und dadurch, dass mindestens eine von der ersten und zweiten Bodenwand durch ein Wandelement (55'; 155') gebildet ist, das an dem Körper an einem Ende (53"; 153") der axialen Bohrung angestückt ist.

4. Vorrichtung nach Anspruch 3, **dadurch gekennzeichnet, dass** die axiale Bohrung (53; 153) blind ist, wobei eine der Bodenwände, insbesondere die erste Bodenwand (15'; 115'), in dem Körper (15; 115) gebildet ist.

5. Vorrichtung nach einem der Ansprüche 1 bis 4, **dadurch gekennzeichnet, dass** mindestens eines von den Enden der axialen Bohrung (53; 153), insbesondere das zweite Ende (53"; 153") der axialen Bohrung, ein offenes Ende ist, das einen verbreiterten Endteil (57; 157) aufweist, der durch eine Schulter (57'; 157") abgegrenzt ist, wobei die Bodenwand des offenen Endes durch ein angestücktes Wandelement (55; 155) gebildet ist, das in dem verbreiterten Endteil angeordnet ist und das durch ein Blockierungsmittel, wie einen Sicherungsring (56; 156), gegen die Schulter blockiert gehalten ist.

6. Vorrichtung nach Anspruch 3, 4 oder 5, **dadurch gekennzeichnet, dass** das angestückte Wandelement über eine Dichtung mit dem Körper (15; 115) zusammenwirkt.

7. Vorrichtung nach einem der Ansprüche 1 bis 6, **dadurch gekennzeichnet, dass** der Körper eine Steuerleitung (54; 154) umfasst, welche die Steuerkammer (52, 152) mit einer Durchbohrung (54') der axialen Außenfläche des Körpers verbindet, wobei diese Durchbohrung in einem einzigen zylindrischen Bereich (44; 144) der axialen Außenfläche angeordnet ist, der eine axiale Oberfläche definiert, die sich an einem gleichen Durchmesser befindet.

8. Vorrichtung nach einem der Ansprüche 1 bis 7, **dadurch gekennzeichnet, dass** die Federkammer (36') durch eine Drainageleitung (37; 137) mit einem Drainageraum (37', 137') verbunden ist.

9. Vorrichtung nach Anspruch 8, **dadurch gekennzeichnet, dass** die Drainageleitung (37, 137) durch eine Durchbohrung des Körpers (15; 115) des inneren Verteilers gebildet ist.

10. Vorrichtung nach einem der Ansprüche 1 bis 9, **dadurch gekennzeichnet, dass** die zweite Bodenwand (554, 155') des inneren Verteilers durchbohrt ist, um die Drainage der Rückstellkammer (52'; 152') zu ermöglichen.

## Claims

1. A distribution device for a hydraulic machine, which device comprises an internal distributor configured to be disposed in a casing portion (10A), the internal distributor comprising a body (15; 115) that has an outside axial face (15B; 115B) provided with two main grooves (17, 19; 117, 119) respectively for fluid feed and for fluid discharge, and a distribution radial face (15A; 115A), the internal distributor having distribution ducts (23A, 23B, 23C; 123A, 123B, 123C) that open out in the distribution face and a cylinder capacity selector that comprises a slide (50; 150) suitable for being moved in an axial bore (53; 153) in the internal distributor, for connecting the distribution ducts to one or the other of the main grooves, the device further comprising a control chamber (52; 152) suitable for being fed with fluid to cause the slide to be moved, and at least one return spring (55; 155) exerting an opposing force that opposes such movement, the control chamber (52; 152) being situated at a first end (53'; 153') of the axial bore (53; 153) and being closed, at the end opposite from the distribution face (15A; 115A) by a first end wall (15'; 115') of the internal distributor, the control chamber being provided between the first end wall and the first end (50A; 150A) of the slide (50; 150) that faces towards said end wall, the return spring (55; 155) being disposed in a return chamber (52'; 152') situated at the second end (53"; 153") of the axial bore and closed, at the end closer to the radial distribution face (15A; 115A), by a second end wall (55'; 155') of the internal distributor, the device further comprising a thrust spring (36) that co-operates with the casing portion (10A) and the internal distributor to move said internal distributor away from the end wall (11C) of the casing portion (10A), the thrust spring being situated in a spring chamber (36') that is provided axially between the first end wall (15'; 115') of the internal distributor which closes the control chamber and the end wall (11C) of the casing portion (10A), so that the first end wall (15') of the internal distributor is situated axially between the control chamber (52, 152) and the spring chamber (36').

2. A device according to claim 1, **characterized in that** the bore (53; 153) is disposed at the centre of the internal distributor.

3. A device according to claim 1 or claim 2, **characterized in that** the distribution ducts (23A, 23B, 23C; 123A, 123B, 123C, 123D) and the axial bore (53; 153) are formed in a single block forming the body (15; 115) of the internal distributor, and **in that** at least one of the first and second end walls is formed by a wall element (55'; 155') that is separate and mounted on the body at one end (53"; 153") of the axial bore.

4. A device according to claim 3, **characterized in that** the axial bore (53; 153) is a blind bore, one of the end walls, in particular the first end wall (15'; 115') being formed in the body (15; 115).

5. A device according to any one of claims 1 to 4, **characterized in that** at least one of the ends of the axial bore (53; 153), in particular the second end (53"; 153") of the axial bore, is an open end that has a wider end portion (57; 157) defined by a shoulder (57'; 157'), the end wall of said open end being formed by a separate wall element (55; 155) that is disposed in the wider end portion and that is held locked against the shoulder by locking means such as a circlip (56; 156).

6. A device according to claim 3, 4 or 5, **characterized in that** the separate wall element co-operates with the body (15; 115) via a sealing gasket.

7. A device according to any one of claims 1 to 6, **characterized in that** the body is provided with a control duct (54; 154) that connects the control chamber (52; 152) to a hole (54') in the outside axial face of the body, which hole is disposed in a single cylindrical bearing surface (44; 144) of said outside face that defines an axial surface substantially situated at the same diameter.

8. A device according to any one of claims 1 to 7, **characterized in that** the spring chamber (36') is connected via a drainage duct (37; 137) to a drainage enclosure (37'; 137').

9. A device according to claim 8, **characterized in that** the drainage duct (37; 137) is formed by a bore in the body (15; 115) of the internal distributor.

10. A device according to any one of claims 1 to 9, **characterized in that** the second end wall (554; 155') of the distributor is provided with a hole to enable the return chamber (52'; 152') to be drained.
